# EUROPÄISCHE PATENTANMELDUNG

(11) **EP 4 799 789 A1**
(43) Veröffentlichungstag der Anmeldung: **02.09.2026**
(21) Anmeldenummer: 26153091.9
(22) Anmeldetag: 20.01.2026
(51) Int. Cl.: B29C 45/28

(54) **ANTRIEBSEINHEIT FÜR EIN SPRITZGUSSSYSTEM**

(30) Priorität: 22.01.2025 DE 102025102181
(71) Anmelder: Günther Heisskanaltechnik GmbH, 35066 Frankenberg (DE)
(72) Erfinder: SOMMER, Stefan, 35099 Burgwald (DE); SCHNELL, Torsten, 35104 Lichtenfels (DE); WILKE, Jannes, 35039 Marburg (DE)
(74) Vertreter: Patentanwälte Olbricht Buchhold Keulertz

(57) **Zusammenfassung**

Die vorgestellte Erfindung betrifft ein Antriebseinheit (100) zum Bewegen einer Anzahl Düsennadeln (115, 205) in einem Spritzgusssystem (200), wobei die Antriebseinheit (100) umfasst:
- einen Motor (101), der dazu konfiguriert ist, eine Antriebskraft durch eine Rotationsbewegung einer mechanischen Schnittstelle (103) bereitzustellen,
- ein Schiebelement (105), das mit der Anzahl Düsennadeln (115, 205) mechanisch gekoppelt und dazu konfiguriert ist, die Anzahl Düsennadeln (115, 205) zwischen einer unteren Stellung und einer oberen Stellung zu bewegen,
- ein Translationselement (107), das dazu konfiguriert ist, eine Rotationsbewegung der mechanischen Schnittstelle (103) des Motors (101) in eine axiale Bewegung des Schiebelements (105) zu überführen.

## Beschreibung

Die vorgestellte Erfindung betrifft eine Antriebseinheit zum Bewegen einer Anzahl Düsennadeln in einem Spritzgusssystem und ein Spritzgusssystem gemäß den beigefügten Ansprüchen.

Düsen und Düseneinsätze für Spritzgusssysteme sind bspw. durch die DE 10 2010 013 859 A1 bekannt. Demnach besteht eine Düse aus einem Materialrohr und einem Düseneinsatz, die zusammen dazu konfiguriert sind, fließfähige Kunststoffmasse bzw. Schmelze bei einer vorgegebenen Temperatur und relativ hohem Druck einem trennbaren Werkzeugblock (Formnest) zuzuführen.

Zum Kontrollieren eines Massenstroms an Schmelze durch eine Düse werden häufig Düsennadeln verwendet, die entlang ihrer Längsachse bewegt werden können, um einen Auslass einer Düse zu verschließen oder zu öffnen.

Insbesondere bei Spritzgusssystemen mit mehreren Düsen und entsprechend mehreren Düsennadeln ist ein erheblicher Kraftaufwand erforderlich um die Düsennadeln zu bewegen. Um eine hohe Genauigkeit bzgl. Form- und Lagetoleranzen eines Artikels zu erreichen, ist ein absolut gleichmäßiges Schließen der Düsennadeln erforderlich Weiterhin ist eine exakte Kontrolle über die Bewegung der Düsennadeln erforderlich, um ein gleichmäßiges Füllen des Formnests über alle Düsen sicherzustellen. Daher werden zum Bewegen von Düsennadeln in der Regel kostenintensive Apparaturen, wie bspw. Schrittmotoren oder Riemenantriebe verwendet.

Es ist somit eine Aufgabe der vorgestellten Erfindung, ein kosteneffizientes Spritzgusssystem bereitzustellen, das mehrere Düsen parallel verwendet.

Es wird somit gemäß einem ersten Aspekt der vorgestellten Erfindung eine Antriebseinheit zum Bewegen einer Anzahl Düsennadeln in einem Spritzgusssystem vorgestellt.

Die vorgestellte Antriebseinheit umfasst einen Motor, der dazu konfiguriert ist, eine Antriebskraft durch eine Rotationsbewegung einer mechanischen Schnittstelle bereitzustellen, ein Schiebelement, das mit der Anzahl Düsennadeln mechanisch gekoppelt und dazu konfiguriert ist, die Anzahl Düsennadeln zwischen einer unteren Stellung und einer oberen Stellung zu bewegen und ein Translationselement, das dazu konfiguriert ist, eine Rotationsbewegung der mechanischen Schnittstelle des Motors in eine axiale Bewegung des Schiebelements zu überführen.

Die vorgestellte Erfindung basiert auf einem Motor, der dazu konfiguriert ist, eine Antriebskraft durch eine Rotationsbewegung einer mechanischen Schnittstelle bereitzustellen, wie bspw. einem Drehmotor, insbesondere einem Gleichstrommotor, einem Servomotor oder einem Drehstrommotor, der im Vergleich zu einem Schrittmotor deutlich performanter ist, d.h. eine höhere Leistung bereitstellt.

Um jeweilige Düsennadeln eines Spritzgusssystems zu bewegen, ist ein Schiebelement vorgesehen, das sich axial und entsprechend nicht radial bewegt und bspw. mit einem Mechanismus zum Bewegen der Düsennadeln gekoppelt ist.

Um eine durch den erfindungsgemäß vorgesehenen Motor in Form einer Rotationsbewegung bereitgestellte Antriebskraft zum Bewegen des Schiebelements in axialer Richtung zu übertragen, ist das Translationselement vorgesehen. Dies bedeutet, dass das Translationselement eine Drehbewegung des Motors in eine Axialbewegung des Schiebelements überführt. Entsprechend ist das Translationselement sowohl mit dem Motor als auch mit dem Schiebelement mechanisch gekoppelt.

Das Translationselement ist über eine mechanische Schnittstelle des Motors, wie bspw. eine Kupplung, eine Untersetzung, eine Übersetzung oder eine Welle, mit dem Motor gekoppelt.

Dazu greift die mechanische Schnittstelle des Motors bspw. mittig in das Translationselement ein bzw. an dem Translationselement an, um das Translationselement auf einer Kreisbahn zu drehen. Die Drehbewegung des Translationselements wird als Axialbewegung auf des Schiebelement übertragen, das wiederum direkt oder indirekt, bspw. über ein Zwischenelement, jeweilige Düsennadeln zwischen ihrer geschlossenen Stellung und ihrer geöffneten Stellung bewegt.

Es kann vorgesehen sein, dass das Translationselement eine Gegenschnittstelle umfasst, die mit der mechanischen Schnittstelle des Motors mechanisch gekoppelt ist, um die Rotationsbewegung der mechanischen Schnittstelle auf das Translationselement zu übertragen, wobei das Translationselement weiterhin eine Ausnehmung umfasst, in der eine Translationsschnittstelle des Schiebelements beweglich gelagert ist, sodass das Translationselement und das Schiebelement relativ zueinander beweglich sind, wenn sich die Translationsschnittstelle in der Ausnehmung bewegt und kraftschlüssig miteinander verbunden sind und wenn das Translationselement an einem Ende der Ausnehmung anliegt.

Eine Gegenschnittstelle, wie bspw. eine Aufnahme für eine Kupplung, eine Untersetzung, eine Übersetzung oder eine Welle, kann verwendet werden, um das Translationselement und den Motor fest bzw. kraftschlüssig zu verbinden, sodass eine Drehung bzw. eine Rotationsbewegung des Motors zu einer Drehung bzw. einer Rotationsbewegung des Translationselements führt.

Durch eine in einer Ausnehmung des Translationselements bereichsweise beweglich gelagerte Translationsschnittstelle des Schiebelements, wie bspw. einen Zapfen, wird erreicht, dass das Translationselement und das Schiebelement entlang eines ersten Bereichs auf einer Kreisbahn, auf der sich das Translationselement dreht, relativ zueinander beweglich sind, sodass eine Bewegung des Translationselements nicht zu einer Bewegung des Schiebelements führt, und das Translationselement und das Schiebelement entlang eines zweiten Bereichs auf der Kreisbahn kraftschlüssig miteinander gekoppelt sind, sodass eine Bewegung des Translationselements zu einer axialen Bewegung des Schiebelements führt.

Zum Ändern einer Richtung der Auslenkung des Schiebelements kann eine Drehrichtung des Motors geändert werden.

Entsprechend bestimmt eine Länge der Ausnehmung des Translationselements einen Bereich auf der Kreisbahn auf der sich das Translationselement bewegt, der zu keiner Bewegung des Schiebelements führt und, dadurch bedingt, auch einen Bereich auf der Kreisbahn auf der sich das Translationselement bewegt, der zu einer Bewegung des Schiebelements führt. Dies bedeutet, dass eine Form der Ausnehmung eine Länge einer Bewegung des Schiebelements in axialer Richtung vorgibt.

Es kann vorgesehen sein, dass die Ausnehmung außerhalb eines Mittelpunkts des Translationselements liegt und außerhalb eines Mittelpunkts der mechanischen Schnittstelle liegt.

Eine Ausnehmung außerhalb eines Mittelpunkts des Translationselements und außerhalb eines Mittelpunkts der mechanischen Schnittstelle führt dazu, dass die Ausnehmung sich auf einer Kreisbahn bewegt, wenn das Translationselement durch den Motor gedreht wird. Dabei bewirkt ein Abstand der Ausnehmung zum Mittelpunkt des Translationselements als eine Übersetzung der durch den Motor bereitgestellten Antriebskraft gemäß einer vorgegebenen Übersetzungskurve.

Es kann weiterhin vorgesehen sein, dass die Ausnehmung kurvenförmig, insbesondere bogenförmig innerhalb des Translationselements verläuft.

Eine kurvenförmige Ausnehmung bedingt eine Übersetzungskurve der durch den Motor bereitgestellten Antriebskraft auf das Schiebelement, die insbesondere nicht linear verläuft, sodass die Düsennadeln bspw. zu Beginn einer Öffnungsbewegung besonders schnell bewegt werden. Entsprechend kann die Ausnehmung anwendungsbezogen ausgelegt werden, um einen Weg einer Düsennadel bzw. eine Kraftübersetzung einzustellen.

Es kann weiterhin vorgesehen sein, dass eine Steigung der die Ausnehmung formenden Kurve sich im Verlauf der Ausnehmung verändert.

Die Form der Ausnehmung bedingt einen Verlauf mit dem die Antriebskraft des Motors auf das Schiebelement und, dadurch bedingt, auf die Düsennadeln übertragen wird. Dabei bewirkt ein steiler Verlauf eine geringere Kraftübertragung als ein flacher Verlauf.

Es kann weiterhin vorgesehen sein, dass die Ausnehmung zwei Anschläge ausbildet, die eine Relativbewegung des Translationselements zu dem Schiebelement begrenzen.

Durch Anschläge bzw. Enden der Ausnehmung wird ein Punkt definiert, an dem durch den Motor bereitgestellte Antriebsenergie auf das Schiebelement übertragen wird. Die Anschläge können bspw. aus gehärtetem Material bestehen oder mit einer harten Beschichtung beschichtet, insbesondere nitriert sein.

Die Ausnehmung begrenzende Ränder des Translationselements können mit einer Gleitschicht, wie bspw. PTFE beschichtet oder entsprechend bearbeitet, insbesondere poliert sein, um eine energieeffiziente Bewegung der Translationsschnittstelle des Schiebelements in der Ausnehmung sicherzustellen.

Es kann weiterhin vorgesehen sein, dass das Translationselement eine Anzahl Kniehebel umfasst, die mit einer Anzahl Schiebelemente gekoppelt sind, wobei jeweilige Kniehebel außerhalb eines Mittelpunkts des Translationselements und außerhalb eines Mittelpunkts der mechanischen Schnittstelle mit dem Translationselement gekoppelt sind.

Kniehebel eignen sich bspw. als Translationsschnittstelle, um das Schiebelement mit dem Translationselement mechanisch zu koppeln.

Es kann weiterhin vorgesehen sein, dass das Translationselement beidseitig gelagert ist.

Durch eine Lagerung des Translationselements beidseitig, d.h. auf beiden Seiten einer Querachse des Translationselements durch bspw. Kugellager, wird ein stabiler, d.h. besonders schwingungsarmer Lauf des Translationselements erreicht, bei dem insbesondere auf eine Motorwelle wirkende Querkräfte minimiert werden. Dazu kann das Translationselement in einem Raster angeordnet sein, dass an verschiedenen Punkten um die mechanische Schnittstelle des Motors herum an dem Motor angeordnet ist, sodass das Translationselement an dem Motor aufgehangen ist und sich mit dem Motor bewegt.

Es kann weiterhin vorgesehen sein, dass das Translationselement Ausgleichsausnehmungen umfasst.

Ausgleichsausnehmungen, die bspw. entlang einer Kreisbahn vorgesehen sind, auf der die Ausnehmung verläuft, bewirken einen Massenausgleich beim Kraftschluss zwischen dem Schiebelement und dem Translationselement, sodass das Translationselement ruhig läuft.

Weiterhin bedingen Ausgleichsausnehmungen eine minimierte Trägheit des Translationselements aufgrund einer minimierten Masse, sodass das Translationselement besonders stark beschleunigt werden kann, um eine Düsennadel besonders schnell zu schließen.

Es kann weiterhin vorgesehen sein, dass die mechanische Schnittstelle eine Untersetzung oder eine Übersetzung umfasst.

Eine Untersetzung oder eine Übersetzung, wie bspw. ein Getriebe, ermöglicht es eine Übertragungsrate, mit der eine Drehbewegung einer Antriebsachse des Motors zu einer Bewegung des Schiebelements führt, einzustellen. Weiterhin ermöglicht eine Untersetzung eine Kraft, mit der der Motor auf das Schiebelement einwirkt, einzustellen. Insbesondere ermöglicht eine Untersetzung die Verwendung schwacher und schnell drehender Elektromotoren, die entsprechend kosteneffizient und bauraumeffizient sind.

Entsprechend kann vorgesehen sein, dass der Motor ein Elektromotor, insbesondere ein drehender Servomotor ist.

Es kann weiterhin vorgesehen sein, dass das Schiebelement eine Anzahl Ausnehmungen aufweist, in denen ein mit der Anzahl Düsennadeln verbundenes Hubelement beweglich gelagert ist.

Ein Hubelement ermöglicht eine Anbindung einer Vielzahl Düsennadeln an das Schiebelement sowie die Übertragung der axialen Bewegung des Schiebelements entlang einer ersten Achse auf eine Bewegung der Düsennadeln entlang einer zweiten Achse, die vertikal zu der ersten Achse steht.

Es kann weiterhin vorgesehen sein, dass das Hubelement zwischen zwei in einer ersten Richtung längsverschieblich gelagerten Steuerschienen des Schiebelements in einer zu der ersten Richtung quer verlaufenden zweiten Richtung bewegbar ist, wobei das Schiebelement wenigstens zwei Gleitelemente umfasst, die eine Bewegung der Steuerschienen entlang der ersten Richtung in eine Hubbewegung des Hubelements in der zweiten Richtung zu überführen.

Ein zwischen über Gleitelemente in zwei Steuerschienen gelagertes Hubelement kann mit einer großen Kraft beaufschlagt werden und entsprechend viele Düsennadeln bewegen.

Dabei kann eine Form von Ausnehmungen in den Steuerschienen, in denen die Gleitelemente gelagert sind, einen Verlauf der Übertragung der Kraft auf die Düsennadeln vorgegeben bzw. einstellen, sodass bspw. eine langsame Bewegung der Düsennadeln zum Ende einer Schließbewegung erreicht wird, um ein besonders hohe Kraft auf die Düsennadeln sicherzustellen.

Es kann weiterhin vorgesehen sein, dass das Hubelement eine Öffnung zur Durchführung eines Spritzgusselements des Spritzgusssystems aufweist.

Eine Öffnung im Hubelement ermöglicht einen besonders kompakten Aufbau eines entsprechenden Spritzgusssystems.

Es kann weiterhin vorgesehen sein, dass das Translationselement eine kreisrunde Scheibe ist.

Eine kreisrunde Scheibe bedingt einen besonders ruhigen bzw. schwingungsarmen Lauf.

Es kann weiterhin vorgesehen sein, dass der Motor 90° versetzt zu dem Schiebelement angeordnet ist.

Bei einer 90° versetzt zu dem Schiebelement angeordneten Ausrichtung des Motors kann bspw. die mechanische Schnittstelle des Motors durch einfach formschlüssige Verbindung bspw. Passfeder aufgebaut werden, um eine kosteneffiziente Verbindung zu ermöglichen.

Gemäß einem zweiten Aspekt betrifft die vorgestellte Erfindung ein Spritzgusssystem.

Das vorgestellte Spritzgusssystem umfasst eine Anzahl Düsen, ein Zuführsystem zum Zuführen von fließfähiger Masse zu der Anzahl Düsen, eine Anzahl Düsennadeln zum Steuern eines Durchflusses von fließfähiger Masse durch die Anzahl Düsen und eine mögliche Ausgestaltung der vorgestellten Antriebseinheit zum Bewegen der Anzahl Düsennadeln.

Aufgrund der vorgestellten Antriebseinheit ist das vorgestellte Spritzgusssystem besonders kosteneffizient.

Es kann vorgesehen sein, dass die Anzahl Düsen zwischen 2 und 128 Düsen umfasst.

Aufgrund der vorgestellten Antriebseinheit kann, bspw. unter Verwendung einer Untersetzung eine besonders große Antriebskraft bereitgestellt werden, sodass besonders viele Düsennadeln gleichzeitig bewegt werden können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung der vorgestellten Antriebseinheit,
- Fig. 2: eine Detaildarstellung eines Translationselements der Antriebseinheit gemäß Fig. 1,
- Fig. 3: eine Detaildarstellung einer weiteren möglichen Ausgestaltung des Translationselements der vorgestellten Antriebseinheit,
- Fig. 4: eine perspektivische Darstellung des Translationselements gemäß Fig. 3,
- Fig. 5: eine mögliche Ausgestaltung des vorgestellten Spritzgusssystems.

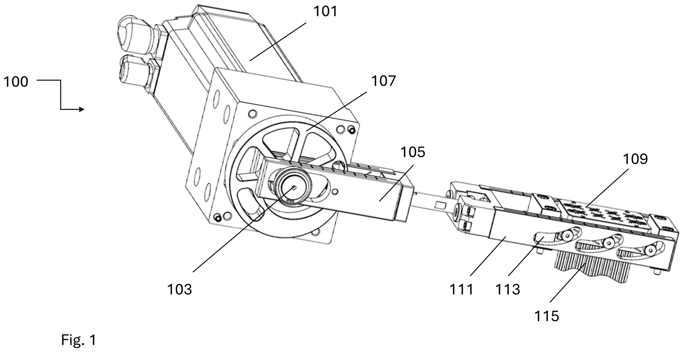

In Fig. 1 ist eine Antriebseinheit 100 zum Bewegen einer Anzahl Düsennadeln in einem Spritgusssystem dargestellt.

Die Antriebseinheit 100 umfasst einen Motor 101, der dazu konfiguriert ist, eine Antriebskraft durch eine Rotationsbewegung einer mechanischen Schnittstelle 103 bereitzustellen, ein Schiebelement 105, das mit der Anzahl Düsennadeln mechanisch gekoppelt und dazu konfiguriert ist, die Anzahl Düsennadeln zwischen einer unteren Stellung und einer oberen Stellung zu bewegen, und ein Translationselement 107, das dazu konfiguriert ist, eine Rotationsbewegung der mechanischen Schnittstelle 103 des Motors 101 in eine axiale Bewegung des Schiebelements 105 zu überführen.

Vorliegend ist weiterhin ein optionales Hubelement 109 dargestellt, das zwischen zwei in einer ersten Richtung längsverschieblich gelagerten Steuerschienen 111 des Schiebelements 105 in einer zu der ersten Richtung quer verlaufenden zweiten Richtung bewegbar ist.

In den Steuerschienen 111 des Schiebelements 105 sind Gleitelemente 113 in Form von Ausnehmungen vorgesehen, die eine Bewegung der Steuerschienen 111 entlang der ersten Richtung in eine Hubbewegung des Hubelements 109 in der zweiten Richtung überführen.

An dem Hubelement sind Düsennadeln 115 angeordnet, sodass diese sich zusammen mit dem Hubelement 109 bewegen, wenn das Schiebelement 105 bewegt wird.

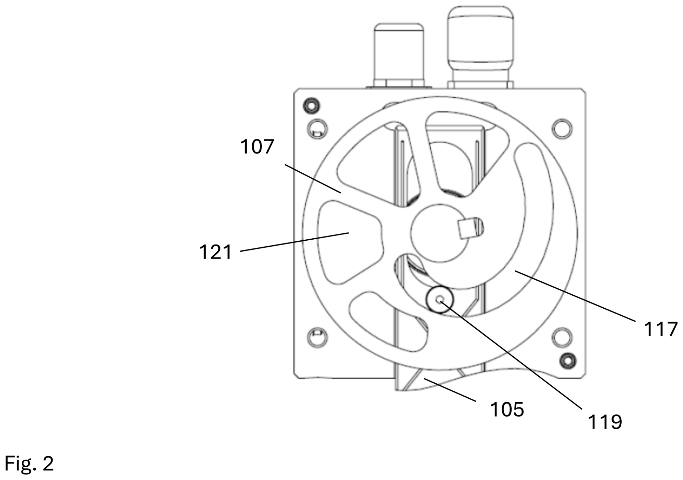

In Fig. 2 ist das Translationselement 107 im Detail dargestellt. Hier ist eine Ausnehmung 117 zu erkennen, in die eine Translationsschnittstelle 119 des Schiebelements 105 eingreift. Die Ausnehmung 117 führt zu einer Entkopplung einer Bewegung des Translationselements 107 von einer Bewegung des Schiebelements 105, sodass das Translationselement 107 sich bewegen kann während das Schiebelement 105 sich gemäß einem vorgegebenen Zeitplan auf einer vorgegebenen Trajektorie entlang einer Horizontalachse vor und zurück bewegt. Aufgrund von Ausgleichsausnehmungen 121 kann das Translationselement 107 besonders stark beschleunigt werden.

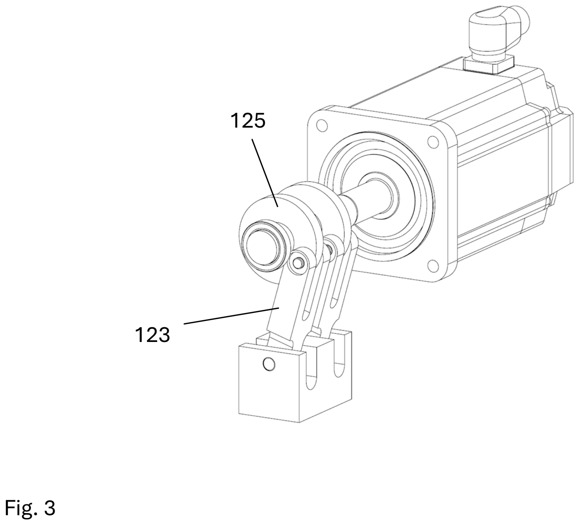

In Fig. 3 ist das Translationselement 107 in einer Ausgestaltung mit Kniehebeln 123 dargestellt, die außermittig an jeweiligen Translationsscheiben 125 angeordnet sind. Je nach Positionierung eines Anbindungspunkts eines jeweiligen Kniehebels 123 an einer jeweiligen Translationsscheibe 125 können die verschiedenen Kniehebel 123 synchron oder asynchron bewegt werden.

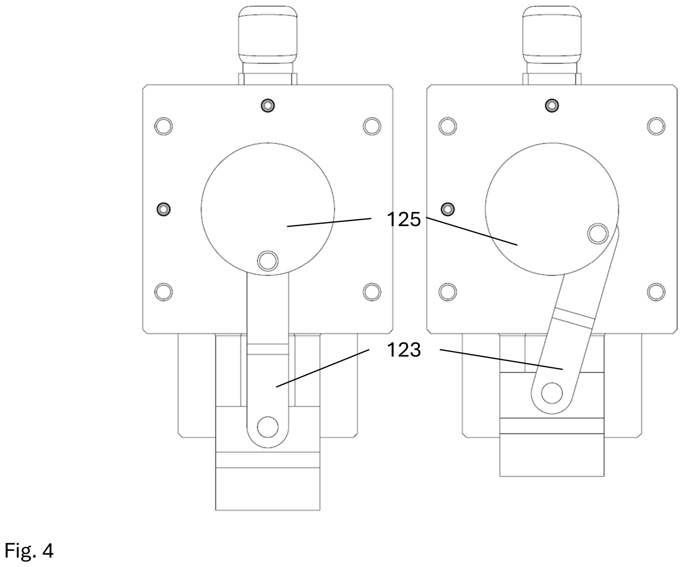

In Fig. 4 ist die Anbindung eines Kniehebels 123 an einer Translationsscheibe 125 im Detail dargestellt. Hier ist erkennbar, dass eine Bewegung der Translationsscheibe 125 zu einer Hubbewegung des Schiebelements 105 führt.

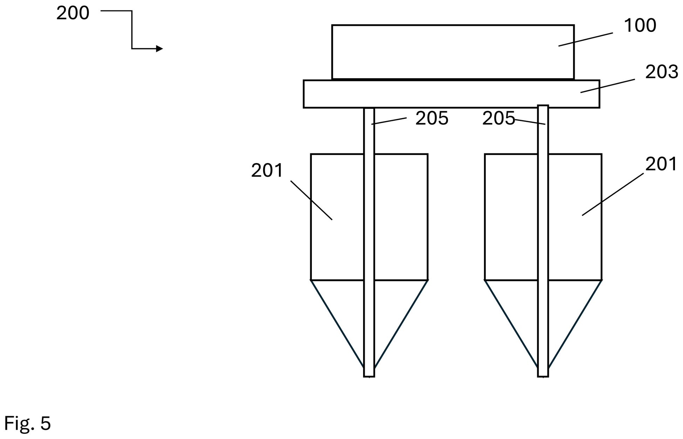

In Fig. 5 ist ein Spritzgusssystem 200 dargestellt. Das Spritzgusssystem 200 umfasst eine Vielzahl Düsen 201, ein Zuführsystem 203 zum Zuführen von fließfähiger Masse zu der Vielzahl Düsen 201, eine Vielzahl Düsennadeln 205 zum Steuern eines Durchflusses von fließfähiger Masse durch die Vielzahl Düsen 201 und eine Antriebseinheit 100 gemäß Fig. 1, zum Bewegen der Vielzahl Düsennadeln 205.

Der Kerngedanke der Erfindung betrifft eine Antriebseinheit 100 zum Bewegen einer Anzahl von Düsennadeln 115, 205 in einem Spritzgusssystem 200, mit einem Motor 101, der dazu konfiguriert ist, eine Antriebskraft durch eine Rotationsbewegung einer mechanischen Schnittstelle 103 bereitzustellen, mit einem Schiebelement 105, das mit der Anzahl Düsennadeln 115, 205 mechanisch gekoppelt und dazu ausgebildet und konfiguriert ist, die Anzahl Düsennadeln 115, 205 zwischen einer unteren Stellung, vorzugsweise einer Schließstellung der Anzahl Düsennadeln 115, 205, und einer oberen Stellung, vorzugsweise einer Öffnungsstellung der Anzahl Düsennadeln 115, 205, zu bewegen, und mit einem Translationselement 107, das dazu ausgebildet und konfiguriert ist, eine Rotationsbewegung der mechanischen Schnittstelle 103 des Motors 101 in eine axiale Bewegung des Schiebelements 105 umzusetzen.

Das Translationselement 107 hat eine Gegenschnittstelle, die mit der mechanischen Schnittstelle 103 des Motors 101 mechanisch gekoppelt ist, um die Rotationsbewegung der mechanischen Schnittstelle 103 auf das Translationselement 107 zu übertragen. Letzteres hat außerhalb seines Mittelpunkts eine bogenförmige Ausnehmung 117, in der eine Translationsschnittstelle 119 des Schiebelements 105 in Form einer Nocke beweglich gelagert ist, sodass das Translationselement 107 und das Schiebelement 105 relativ zueinander beweglich sind, wenn sich die Translationsschnittstelle 119 in der Ausnehmung 117 bewegt. Das Translationselement 107 und das Schiebelement 105 sind kraftschlüssig miteinander verbunden, sobald das Translationselement 119 an einem Ende der Ausnehmung 117 anliegt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Antriebseinheit
- 101: Motor
- 103: mechanische Schnittstelle
- 105: Schiebelement
- 107: Translationselement
- 109: Hubelement
- 111: Steuerschiene
- 113: Gleitelement
- 115: Düsennadel
- 117: Ausnehmung
- 119: Translationsschnittstelle
- 121: Ausgleichsausnehmung
- 123: Kniehebel
- 125: Translationsscheibe
- 200: Spritzgusssystem
- 201: Düse
- 203: Zuführsystem
- 205: Düsennadel

## Patentansprüche

1. Antriebseinheit (100) zum Bewegen einer Anzahl Düsennadeln (115, 205) in einem Spritzgusssystem (200),
wobei die Antriebseinheit (100) umfasst:
- einen Motor (101), der dazu konfiguriert ist, eine Antriebskraft durch eine Rotationsbewegung einer mechanischen Schnittstelle (103) bereitzustellen,
- ein Schiebelement (105), das mit der Anzahl Düsennadeln (115, 205) mechanisch gekoppelt und dazu konfiguriert ist, die Anzahl Düsennadeln (115, 205) zwischen einer unteren Stellung und einer oberen Stellung zu bewegen,
- ein Translationselement (107), das dazu konfiguriert ist, eine Rotationsbewegung der mechanischen Schnittstelle (103) des Motors (101) in eine axiale Bewegung des Schiebelements (105) zu überführen.

2. Antriebseinheit (100) nach Anspruch 1,
**dadurch gekennzeichnet,**
**dass** das Translationselement (107) eine Gegenschnittstelle umfasst, die mit der mechanischen Schnittstelle (103) des Motors (101) mechanisch gekoppelt ist, um die Rotationsbewegung der mechanischen Schnittstelle (103) auf das Translationselement (107) zu übertragen, und
wobei das Translationselement (107) weiterhin eine Ausnehmung (117) umfasst, in der eine Translationsschnittstelle (119) des Schiebelements (105) beweglich gelagert ist, sodass das Translationselement (107) und das Schiebelement (105) relativ zueinander beweglich sind, wenn sich die Translationsschnittstelle (119) in der Ausnehmung (117) bewegt und kraftschlüssig miteinander verbunden sind, wenn das Translationselement (119) an einem Ende der Ausnehmung (117) anliegt.

3. Antriebseinheit (100) nach Anspruch 2,
**dadurch gekennzeichnet,**
**dass** die Ausnehmung (117) außerhalb eines Mittelpunkts des Translationselements (107) liegt und außerhalb eines Mittelpunkts der mechanischen Schnittstelle (103) liegt.

4. Antriebseinheit (100) nach Anspruch 2 oder 3,
**dadurch gekennzeichnet,**
**dass** die Ausnehmung (117) kurvenförmig, insbesondere bogenförmig innerhalb des Translationselements (107) verläuft.

5. Antriebseinheit (100) nach Anspruch 4,
**dadurch gekennzeichnet,**
**dass** eine Steigung der die Ausnehmung (117) formenden Kurve sich im Verlauf der Ausnehmung (117) verändert.

6. Antriebseinheit (100) nach einem der voranstehenden Ansprüche,
**dadurch gekennzeichnet,**
**dass** die Ausnehmung (100) zwei Anschläge ausbildet, die eine Relativbewegung des Translationselements (107) zu dem Schiebelement (105) begrenzen.

7. Antriebseinheit (100) nach einem der voranstehenden Ansprüche,
**dadurch gekennzeichnet,**
**dass** das Translationselement (107) beidseitig gelagert ist.

8. Antriebseinheit (100) nach einem der voranstehenden Ansprüche,
**dadurch gekennzeichnet,**
**dass** das Translationselement (107) Ausgleichsausnehmungen (121) umfasst.

9. Antriebseinheit (100) nach einem der voranstehenden Ansprüche,
**dadurch gekennzeichnet,**
**dass** die mechanische Schnittstelle (103) eine Untersetzung oder eine Übersetzung umfasst.

10. Antriebseinheit (100) nach einem der voranstehenden Ansprüche,
**dadurch gekennzeichnet,**
**dass** der Motor (101) ein Elektromotor, insbesondere ein drehender Servomotor ist.

11. Antriebseinheit (100) nach einem der voranstehenden Ansprüche,
**dadurch gekennzeichnet,**
**dass** das Schiebelement (105) eine Anzahl Ausnehmungen aufweist, in denen ein mit der Anzahl Düsennadeln (115, 205) verbundenes Hubelement (109) beweglich gelagert ist.

12. Antriebseinheit (100) nach Anspruch 12,
**dadurch gekennzeichnet,**
**dass** das Hubelement (109) zwischen zwei in einer ersten Richtung längsverschieblich gelagerten Steuerschienen (111) des Schiebelements (105) in einer zu der ersten Richtung quer verlaufenden zweiten Richtung bewegbar ist, wobei das Schiebelement (105) wenigstens zwei Gleitelemente (113) umfasst, die eine Bewegung der Steuerschienen (111) entlang der ersten Richtung in eine Hubbewegung des Hubelements (109) in der zweiten Richtung zu überführen.

13. Antriebseinheit (100) nach Anspruch 12 oder 13,
**dadurch gekennzeichnet,**
**dass** das Hubelement (109) eine Öffnung zur Durchführung eines Spritzgusselements des Spritzgusssystems (200) aufweist.

14. Spritzgusssystem (200),
wobei das Spritzgusssystem (200) umfasst:
- eine Anzahl Düsen (201),
- ein Zuführsystem (201) zum Zuführen von fließfähiger Masse zu der Anzahl Düsen (201),
- eine Anzahl Düsennadeln (115, 205),
- eine Antriebseinheit (100) nach einem der Ansprüche 1 bis 16 zum Bewegen der Anzahl Düsennadeln (115, 205).

15. Spritzgusssystem (200) nach Anspruch 14,
**dadurch gekennzeichnet,**
**dass** die Anzahl Düsen (201) zwischen 2 und 128 Düsen (201) umfasst.
